# EUROPÄISCHE PATENTSCHRIFT

(11) **EP 1 886 526 B1**
(45) Veröffentlichungstag und Bekanntmachung des Hinweises auf die Patenterteilung: **15.07.2009**
(21) Anmeldenummer: 06753969.2
(22) Anmeldetag: 30.05.2006
(51) Int. Cl.: H04W 4/06

(54) **VERFAHREN ZUR VERGRÖSSERUNG DER BANDBREITE EINES GRUPPENRUFS**
METHOD FOR ENLARGING THE BANDWIDTH OF A GROUP CALL
PROCEDE POUR ELARGIR LA BANDE PASSANTE D'UN APPEL GROUPE

(30) Priorität: 31.05.2005 DE 102005026660
(43) Veröffentlichungstag der Anmeldung: 13.02.2008
(73) Patentinhaber: T-Mobile International AG & Co. KG, 53227 Bonn (DE)
(72) Erfinder: SCHMITT, Harald, 56170 Bendorf (DE)
(74) Vertreter: Lehmann, Judith Christina
(86) Internationale Anmeldenummer: PCT/EP2006/005134
(87) Internationale Veröffentlichungsnummer: WO 2006/128669

(56) Entgegenhaltungen:
- WO-A-00/69190
- US-A- 5 299 199
- US-A- 6 016 311
- US-B1- 6 240 079

## Beschreibung

Die vorliegende Erfindung betrifft ein Verfahren zur Bereitstellung von Diensten in einem Kommunikationsnetz, insbesondere in einem GSM-Funknetz. Dabei bezieht sich die vorliegende Erfindung insbesondere auf eine gleichzeitige Durchführbarkeit eines Gruppenrufs und sogenannter Point-to-Point-Dienste, insbesondere auf ein Verfahren zur Vergrößerung der Bandbreite eines Gruppenrufes. Ferner betrifft die vorliegende Erfindung ein entsprechendes Computerprogramm und ein Computerprogrammprodukt.

In GSM (Global System for Mobile Communications) ist ein sogenannter Voice Group Call Service (VGCS) standardisiert, welcher die Möglichkeit bietet, dass ein Teilnehmer mit mehreren Teilnehmern kommunizieren kann. Der VGCS stellt somit einen sogenannten Point-to-Multipoint-Dienst dar. Derzeit ist es Teilnehmern, die an einem Voice Group Call teilnehmen möchten, nur dann möglich, parallel zu einem aktiven VGC teilnehmerspezifische Punkt-zu-Punkt-Dienste bzw. Point-to-Point-Services durchzuführen, wenn sie spezielle mobile Endgeräte bzw. Terminals verwenden. Derartige mobile Endgeräte müssen dabei über zwei Empfangs- und mindestens eine Sendeeinheit verfügen. Diese Art von Endgeräten gehört zu einer sogenannten Klasse A (Class A) von mobilen Endgeräten. Aus GPRS (General Packet Radio Service) ist bereits eine derartige Klasse A von Terminals definiert, wobei sich die der Klasse A zugehörenden mobilen Endgeräte dort dadurch auszeichnen, dass mit ihrer Hilfe gleichzeitig GPRS-Dienste und GSM-Übertragungsdienste durchgeführt werden können. In GSM ist es mittels derartiger Geräte möglich, parallel zu einem aktiven Voice Group Call (VGC) teilnehmerspezifische sogenannte Point-to-Point-Dienste, wie beispielsweise eine SMS-Übertragung (Short Message Service) durchzuführen. Weiterhin bieten diese Typen von mobilen Endgeräten die Möglichkeit, während eines aktiven VGCs eingehende Verbindungswünsche für sogenannte Circuit Switched (CS)- und Packet Switched (PS)-Dienste zu erhalten. Allerdings sind zu der genannten Class A gehörende mobile Endgeräte momentan aufgrund ihrer Komplexität nicht bzw. nicht in ausreichender Menge verfügbar. Darüber hinaus werden derartige mobile Endgeräte, sobald sie in ausreichender Menge verfügbar sein werden, aufgrund ihrer Komplexität im oberen Preissegment angesiedelt sein.

Eine weitere Möglichkeit, aktiven VGC-Teilnehmern die Möglichkeit zu geben, parallel Point-to-Point-Dienste durchzuführen ist, ungenutzte Bandbreite des Voice Group Call Funkkanals zu verwenden, bzw. Bandbreite dem Voice Group Call zu entziehen. Das GSM-Funknetz beinhaltet in seinem Frequenzspektrum derzeit das GSM900 und GSM1800 Frequenzband. Eine Übertragung in GSM900 in Aufwärtsrichtung (Uplink) von mobilen Endgeräten zu einer Basisstation des GSM-Funknetzes wird in einem Frequenzbereich von 880 MHz bis 915 MHz abgewickelt, während eine Übertragung in Abwärtsrichtung (Downlink) von einer Basisstation zu einem mobilen Endgerät in einem Frequenzbereich von 925 MHz bis 960 MHz abgewickelt wird. Im GSM1800 reicht der Frequenzbereich für die Aufwärtsrichtung von 1.710 MHz bis 1.785 MHz, während der Frequenzbereich für die Abwärtsrichtung von 1.805 MHz bis 1.880 MHz reicht. Die Frequenzbänder werden nach einem sogenannten Frequenzmultiplex-Verfahren in 125 Funkkanäle zu je 200 kHz Bandbereite unterteilt. Auf jeder Trägerfrequenz werden durch ein sogenanntes Zeitmultiplex-Verfahren acht periodische Zeitschlitze, sogenannte Timeslots, realisiert. Ein Übertragungskanal ist dann durch seine Trägerfrequenz und seinem zur Verfügung stehenden, periodisch wiederkehrenden Zeitschlitz charakterisiert. Diese auf einer Luftschnittstelle verwendeten physikalischen Kanäle haben einen alle 4,615 ms wiederkehrenden Zeitschlitz. Die physikalischen Kanäle, sogenannte Slots, werden, sobald sie als Sprach- oder Signalisierungsverbindung benützt werden, als logische Kanäle bezeichnet. In der Regel entspricht ein physikalischer Kanal einem logischen Kanal. In Abhängigkeit von der notwendigen Übertragungskapazität ist es jedoch möglich, mehrere logische Aktivitäten über einen physikalischen Kanal abzuwickeln oder aber mehrere physikalische Kanäle für die Aufgaben eines logischen Kanals zu benützen. Im allgemeinen erhält jeder Teilnehmer einen Zeitschlitz zugeordnet. Nach sieben Zeitschlitzen darf der betreffende Teilnehmer wieder senden. Außerhalb eines zugewiesenen Zeitschlitzes darf absolut nichts gesendet werden, um andere Teilnehmer nicht zu stören. Dieses Einschalten für einen Zeitschlitz mit anschließendem Ausschalten wird auch als Puls- oder Burst-Betrieb bezeichnet. Bis zu acht Teilnehmer greifen im GSM scheinbar gleichzeitig auf eine einzelne Frequenz zu. Diese acht Zeitschlitze werden zu einem sogenannten TDMA-Rahmen (Time Division Multiple Access) zusammengefasst. Jeder Zeitschlitz hat eine Länge von 577 µs und jeder TDMA-Rahmen von 4,615 ms. Ein Burst stellt, wie bereits erwähnt, einen Ausschnitt aus einem TDMA-Rahmen mit der Länge eines Zeitschlitzes dar. Man unterscheidet dabei verschiedene Arten von Bursts, wobei der sogenannte "Normalburst" zum normalen Informationsaustausch, für eine Signalisierung und ein Gespräch dient.

Wie bereits erwähnt zeichnet sich ein physikalischer Kanal durch die Zuordnung einer Frequenz und eines Zeitschlitzes aus. Auf diesem physikalischen Kanal wird in Burstform gesendet. Prinzipiell wird zwischen Nutzdaten, wie beispielsweise Sprache, und Signalisierungsdaten unterschieden.

Einem bereits erwähnten Voice Group Call wird nunmehr ein Zeitschlitz aus einem benannten TDMA-Rahmen zugeordnet.

Dieser Zeitschlitz hat eine Länge von 577 µs und entspricht gleichzeitig einer bestimmten Frequenz. Wird einem Voice Group Call, wie bereits erwähnt, ungenutzte Bandbreite entzogen, so kann diese beispielsweise dazu genutzt werden, SMS zu übertragen. Weiterhin können über diese ungenutzte Bandbreite seitens des Voice Group Calls eingehende Verbindungswünsche für PS- und CS-Dienste übertragen werden. Dabei kann es sich beispielsweise um sogenanntes Inband-Paging oder Inband-Notification handeln. Unter Inband-Paging oder Inband-Notification versteht man dabei, dass eingehende Verbindungswünsche innerhalb eines bestehenden logischen Kanals, hier dem Voice Group Call, gesendet werden. Im Gegensatz hierzu werden Pagings und Notifications im Normalfall über einen für eine jeweilige Funkzelle spezifischen Broadcast Kanal (BCCH) übertragen. Der Nachteil der Option, dass ungenutzte Bandbreite verwendet wird, liegt in der geringen verfügbaren Bandbreite, welche für Point-to-Point-Dienste und Inband-Paging oder -Notification verwendet werden kann. Dies führt dazu, dass eine Vielzahl von parallelen Point-to-Point-Diensten oder sogenannten Inband-Pagings/-Notifications nicht übertragen werden können. Für die weitere Option, dass Bandbreite dem VGC entzogen wird, liegt ein weiterer Nachteil darin, dass zudem die Sprachqualität des VGC-Dienstes reduziert wird.

US-A-5 299 199 beschreibt ein Verfahren für einen Gruppenruf in einem GSM-Netz, wobei dem Gruppenruf innerhalb eines in mehrere Zeitschlitze unterteilten Funkkanals des GSM-Netzes ein erster Zeitschlitz zugeordnet wird, wobei der erste Zeitschlitz zur Übertragung von Nutzdaten des Gruppenrufs vorgesehen wird.

Vor dem Hintergrund des beschriebenen Standes der Technik, war es nunmehr eine Aufgabe der vorliegenden Erfindung, die für Point-to-Point-Dienste und Inband-Paging/-Notification verfügbare Bandbreite innerhalb eines aktiven VGC-Dienstes zu erhöhen. Somit wäre es möglich, parallel zum aktiven VGC-Dienst eine Vielzahl von parallelen Point-to-Point-Diensten und Inband-Pagings/-Notifications durchzuführen. Ferner soll ein Einfluss von Point-to-Point-Diensten und Inband-Signalisierung auf die Sprachqualität des VGCs verhindert werden.

Dazu schlägt die vorliegende Erfindung ein Verfahren mit den Merkmalen von Patentanspruch 1, ein Computerprogramm mit den Merkmalen des Patentanspruchs 10 und ein Computerprogrammprodukt mit den Merkmalen von Patentanspruch 11 vor.

Gemäß Patentanspruch 1 der vorliegenden Patentanmeldung wird ein Verfahren zur Erhöhung einer für einen Gruppenruf verfügbaren Bandbreite in einem GSM-Netz bereitgestellt, wobei dem Gruppenruf innerhalb eines in mehrere Zeitschlitze unterteilten Funkkanals des GSM-Netzes ein erster und mindestens ein zweiter Zeitschlitz zugeordnet werden, wobei der erste Zeitschlitz zur Übertragung von Nutzdaten des Gruppenrufs und der mindestens eine zweite Zeitschlitz zur Bereitstellung zusätzlicher Bandbreite vorgesehen werden.

Es ist denkbar, dass dem Voice Group Call (VGC) mehrere Zeitschlitze zugewiesen werden, wobei der erste Zeitschlitz, wie bereits erwähnt, zur Übertragung von Nutzdaten, beispielsweise in Form von Sprache oder anderen Daten, genutzt wird, während der mindestens eine zweite oder die mehreren Zeitschlitze zusätzliche Bandbreite bereitstellen.

In einer Ausführungsform des erfindungsgemäßen Verfahrens wird vorgesehen, dass der erste und der mindestens eine zweite Zeitschlitz des Funkkanals zueinander benachbarte Zeitschlitze innerhalb des Funkkanals darstellen. Der mindestens eine zweite zusätzliche Zeitschlitz, ein sogenannter VGC-Signalisierungszeitschlitz, stellt zusätzliche Bandbreite bereit, welche für unterschiedliche Zwecke verwendet werden kann.

Es ist denkbar, dass dem mindestens einen zweiten Zeitschlitz ein logischer Kanal zugewiesen wird.

Wie bereits einleitend erwähnt, zeichnet sich ein physikalischer Kanal durch die Zuordnung einer Frequenz und eines Zeitschlitzes aus. Auf einem derartigen physikalischen Kanal wird in Burstform gesendet. Diese physikalischen Kanäle, auch als Slots bezeichnet, werden, sobald sie als Sprach- oder Signalverbindung benutzt werden, als logische Kanäle bezeichnet. In der Regel entspricht ein physikalischer Kanal einem logischen Kanal. Genutzt wird ein Slot durch Bursts mit einer jeweiligen Länge von 148 Bit, die, um Überlappung mit anderen Bursts zu vermeiden, um die Schutzzeit entsprechend der Dauer von 8,25 Bit kürzer als die Slots sind. Wenn Nachrichten länger als ein Burst sind, werden sie auf mehrere Bursts aufgeteilt und dann übertragen. Der Inhalt eines jeden Zeitschlitzes ist abhängig vom Bursttyp unterschiedlich strukturiert. Der Bursttyp hängt dabei vom logischen Kanal ab, den ein physikalischer Kanal "trägt".

Bei dem erfindungsgemäßen Verfahren ist es nunmehr denkbar, dass dem mindestens einen zweiten Zeitschlitz ein in 3GPP standardisierter logischer Kanal zugewiesen wird. 3GPP oder 3^{rd} Generation Partnership Project ist eine weltweite Kooperation von Standardisierungsgremien für die Standardisierung im Mobilfunk. Dem mindestens einen zweiten Schlitz können bspw. die im Folgenden genannten logischen Kanäle zugewiesen werden.

Zum einen kann es sich um eine Kombination von in 3GPP standardisierten logischen Kanälen handeln, die jeweils auf einen physikalischen Kanal abgebildet werden können. Für die Anordnung von logischen Kanälen auf einem physikalischen Kanal werden Multiframes definiert. Ein Multiframe besteht dabei aus 26 oder 51 TDMA-Rahmen und gibt an, in welcher Reihenfolge die logischen Kanäle einer Kombination aufeinander folgen können. Für jede der im folgenden aufgeführten Kombinationen ist ein Multiframe definiert. Ein Multiframe für einen einzelnen physikalischen Kanal enthält entweder 26 oder 51 Zeitschlitze, die jeweils eine Rahmendauer auseinander liegen. Es können bspw. DCCH-Kanäle (Dedicated Control Channel) kombiniert werden, nämlich ein SDCCH/8-Kanal (Stand-Alone Dedicated Control Channel) mit einem SACCH/8-Kanal (Slow Associated Dedicated Control Channel), was als Kombination "SDCCH/8+SACCH/8" formuliert wird. 8 entspricht dabei jeweils der Anzahl von Subkanälen bzw. Unterkanälen der voranstehenden DCCH-Kanäle. Ein Unterkanal entsteht durch eine Unterteilung eines physikalischen Kanals in mehrere Untereinheiten, bspw. zur Übertragung von Sprach-, Daten- oder Bildsignalen. Die Bezeichnung DCCH ist ein Oberbegriff für drei bidirektionale Punkt-zu-Punkt-Steuerkanäle, über die mit unterschiedlichen Bitraten Signalisierungsnachrichten zur Verbindungssteuerung übertragen werden. Ein SDCCH-Kanal wird immer dann betrieben, solange nur Steuerinformationen oder kurze Textnachrichten übertragen wird. Steuerinformationen des SDCCH betrifft beispielsweise eine Registrierung, Authentifizierung, Aufenthalts-Koordinierung und Daten zur Verbindungseinrichtung. Ein SACCH-Kanal wird immer parallel zu einem TCH-Kanal (Traffic Channel) oder einem SDCCH-Kanal zugeordnet. Über den SACCH werden mit einer Datenrate von 950 Bit/s Systeminformationen vom Netz zur Mobilstation und Meßdaten über Pegel- und Empfangsqualität von der Mobilstation an das Netz übertragen. Ferner können ein FCCH-Kanal (Frequency Correction Channel), ein SCH-Kanal (Synchronisation Channel), ein BCCH-Kanal (Broadcast Control Channel), ein CCCH-Kanal (Common Control Channel), ein SDCCH/4-Kanal und ein SACCH/8-Kanal miteinander kombiniert werden, was in Kombination "FCCH+SCH+BCCH+CCCH+SDCCH/4+SACCH/8" formuliert wird. Ein FCCH-Kanal ist in der Regel ein Kanal, über welchen ein sogenannter Frequency Correction Burst zur Korrektur einer Sendefrequenz übertragen wird. Ein SCH-Kanal kann dazu verwendet werden, um Synchronisation Bursts zur Mobilstation zu übertragen, damit sie sich zeitlich synchronisieren kann. Ein BCCH-Kanal bezeichnet einen Kanal, über welchen Informationen über das Netz zu mehreren Mobilstationen übertragen werden. Dazu gehören beispielsweise Kennzeichnung des Netzes, Verfügbarkeit bestimmter Optionen wie Frequency Hopping, Voice Activity Detection sowie die von einer Feststation und benachbarten Feststationen verwendeten Frequenzen. Ein CCCH-Kanal bezeichnet einen Steuerkanal, über welchen Verbindungsaufnahmen zwischen Netz und einem mobilen Endgerät abgewickelt werden. Die genannten möglichen und zulässigen Kombinationen von logischen Kanälen sind in einer technischen Spezifikation von 3GPP dokumentiert, nämlich in 3GPP TS 45.002, Chapter 6.4.

Neben diesen genannten Kombinationen ist es auch denkbar, dass für den mindestens einen zweiten Kanal ein CBCH-Kanal (Cell Broadcast Channel) verwendet wird. Der CBCH-Kanal kann im Downlink-Verkehr verwendet werden, um einen sogenannten Short Message Service Cell Broadcast (SMSCB) auszuführen. Der CBCH-Kanal verwendet dabei den gleichen physikalischen Kanal wie ein SDCCH-Kanal.

Ferner können auch neue noch nicht in 3GPP spezifizierte logische Kanäle für den mindestens einen zweiten Zeitschlitz verwendet werden. Dabei kann es sich beispielsweise um eine Kombination eines CCCH-Kanals mit einem SDCCH/X-Kanal handeln. X steht dabei für die Anzahl der SDCCH-Unterkanäle (Subchannels). Ferner sind auch weitere Kombinationen von SDCCH-, SACCH-, PCH- und RACH-Kanälen denkbar. Ein PCH-Kanal ist ein Kanal, der nur in Downlink-Richtung existiert und zur selektiven Adressierung eines gerufenen mobilen Endgerätes bei einem Verbindungswunsch aus dem Netz aktiviert wird. PCH steht für Paging Channel. Ein RACH-Kanal (Random Access Channel) ist ein Zugriffskanal, welcher nur in Uplink-Richtung vorkommt und einer Mobilstation ermöglicht, über ein sogenanntes S-ALOHA-Zugriffsverfahren, bei einer Feststation Kanalkapazität für einen Verbindungswunsch anzufordern. Sowohl der PCH-Kanal wie auch der RACH-Kanal gehören zu der Gruppe der CCCH-Kanälen, d.h. zur Gruppen von Steuerkanälen, über die die Verbindungsaufnahmen zwischen Netz und einem mobilen Endgerät abgewickelt werden.

Die genannten logischen Kanäle, welche dem mindestens einen zweiten Zeitschlitz des VGCs zugewiesen werden können, können dabei für verschiedene Anwendungsfälle verwendet werden. Ein NCH-Kanal, der Teil eines CCCH-Kanals darstellt, kann beispielsweise für das Senden von sogenannten Inband-Notifications weiterer VGCs verwendet werden. Ein PCH-Kanal (Paging Channel), der ebenfalls Teil eines CCCH-Kanals ist, kann für das Senden von Inband-Pagings von CS-(Circuit Switched) und PS-(Packet Switched)Diensten verwendet werden. Ein RACH-Kanal, der ebenfalls Teil eines CCCH-Kanals bildet, kann seitens eines Teilnehmers des VGCs verwendet werden, um Zugriff auf einen Punkt-zu-Punkt-Dienst zu erhalten. Der RACH-Kanal kann demnach auch als Zugriffskanal bezeichnet werden, der, wie bereits erwähnt, nur in Uplink-Richtung vorkommt und einem Teilnehmer ermöglicht, über ein Zugriffsverfahren, bei der Feststation Kanalkapazität für einen Verbindungswunsch anzufordern. Ein SDCCH-Kanal kann zur Übertragung von Kurznachrichten, d.h. von SMS verwendet werden. Ein BCCH-Kanal dient zur Übertragung von Broadcast-Informationen, was auch in Form einer Broadcast SMS erfolgen kann.

Dabei ist zu erwähnen, dass ein CCCH-Kanal nur einmal innerhalb eines VGCs verwendet werden sollte. Das bedeutet, dass im Falle, dass dem VGC mehrere zweite Zeitschlitze zugewiesen sind, diesen zweiten Zeitschlitzen nur einmal ein CCCH-Kanal zugewiesen werden sollte. Generell kann auch der kombinierte BCCH+CCCH-Kanal auf dem mindestens einen zweiten VGC Zeitschlitz übertragen werden. In einem derartigen Fall ist ein koordiniertes Senden von Inband-Pagings und -Notifications nicht notwendig, da auf dem kombinierten BCCH+CCCH-Kanal alle Pagings und Notifications einer Funkzelle übertragen werden. In diesem Fall ist eine netzinterne Koordinierung von Pagings und Notifications nicht notwendig.

Aufgrund der zusätzlichen Signalisierungskapazität im VGC in Form des mindestens einen zweiten Zeitschlitzes ist die Durchführung von Point-to-Point-Diensten als auch ein Übertragen von Inband-Signalisierung ohne Sprachqualitätsverluste des VGCs möglich, da keine Bandbreite des VGC Sprach-Zeitschlitzes benötigt wird. Dadurch wird die Sprachqualität des VGCs unabhängig von der Anzahl der zu sendenden Inband-Signalisierungs-Nachrichten und der aktivierten Point-to-Point-Dienste.

In einer weiteren Ausführungsform des erfindungsgemäßen Verfahrens wird der mindestens eine zweite Zeitschlitz je nach benötigter Bandbreite dynamisch zugewiesen. Diese Zuweisung erfordert netzseitig ein koordiniertes Zuweisen von VGC-Sprach- und VGC-Signalisierungs-Zeitschlitzen. Auf Seiten eines Teilnehmers des VGCs wird eine Unterstützung von sogenannten Multislot-Zuweisungen notwendig. Eine Multislot-Unterstützung wird bereits durch den Dienst GPRS (General Packet Radio Service) benötigt. Es ist denkbar, dass die GPRS-Multislotfähigkeit eines mobilen Endgerätes, welche durch eine GPRS-Multislotklasse angegeben ist, für das erfindungsgemäße Verfahren verwendet werden kann. Dabei muss netzseitig die GPRS-Multislotklasse des mobilen Endgerätes bei der koordinierten Zuweisung von VGC-Sprach- und - Signalisierungs-Zeitschlitzen beachtet werden.

In einer anderen möglichen Ausführungsform des erfindungsgemäßen Verfahrens werden neue spezifische Multislotklassen für an einem VGC teilnehmenden mobilen Endgerät definiert.

Darüber hinaus ist es denkbar, dass der mindestens eine zweite Zeitschlitz mehreren Gruppenrufen zugeordnet wird. Das bedeutet, dass ein aktiver VGC zur Bereitstellung zusätzlicher Bandbereite für weitere Dienste an der einem anderen aktiven VGC zugewiesenen zusätzlichen Bandbreite in Form des mindestens einen zweiten Zeitschlitzes partizipiert. Eine derartige Vorgehensweise ist sehr effektiv, da dadurch die zusätzlich zur Verfügung gestellte Bandbreite in Form des mindestens einen zweiten Zeitschlitzes effektiv seitens der aktiven VGCs genutzt werden kann. Beispielsweise kann ein VGC-Signalisierungs-Zeitschlitz auf Zeitschlitz-Nummer X von zwei VGCs verwendet werden, deren Sprach-Zeitschlitze auf Zeitschlitz-Nummer X-1 bzw. X+1 liegen.

Ferner umfasst die vorliegende Erfindung ein Computerprogramm mit einem Programmcode, mit dessen Hilfe alle Schritte des erfindungsgemäßen Verfahrens durchgeführt werden können, wenn das Computerprogramm auf einem Computer oder einer geeigneten Recheneinheit ausgeführt wird. Ein entsprechendes Computerprogrammprodukt wird auch umfasst. Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurzbeschreibung der Erfindung

Die Erfindung ist anhand eines Ausführungsbeispieles in der Zeichnung schematisch dargestellt und wird im folgenden unter Bezugnahme auf die Zeichnung ausführlich beschrieben.

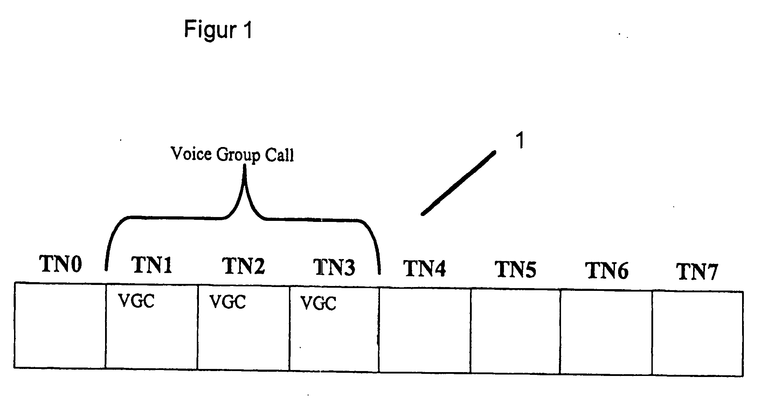

- Figur 1: zeigt ein Beispiel einer Ausführungsform des er- findungsgemäßen Verfahrens.

Figur 1 zeigt einen Funkkanal 1 eines GSM-Netzes. Der Funkkanal 1 ist in acht Zeitschlitze (Timeslots) TN0 bis TN7 unterteilt. Jeder der acht Zeitschlitze hat eine Länge von etwa 0,57 ms. Die acht Zeitschlitze TN0 bis TN7 bilden zusammen einen sogenannten TDMA-Rahmen bzw. TDMA-Frame. Durch diese Unterteilung entstehen acht physikalische Kanäle, wodurch durch Funkkanal 1 acht Nutzer versorgt werden können. Dieses Aufteilungsverfahren eines Funkkanals bezeichnet man als "Time Division Multiple Access" (TDMA). Die in einem Zeitschlitz TN0 bis TN7 übertragene Datenmenge von 156,25 Bit wird als Burst bezeichnet. Jeder der acht physikalischen Kanäle TN0 bis TN7 ist durch seine Trägerfrequenz und der ihm zur Verfügung stehenden, alle 4,615 ms wiederkehrenden Zeitschlitz charakterisiert. Die physikalischen Kanäle TN0 bis TN7 werden, sobald sie als Sprach- oder Signalisierungs-Verbindung benützt werden, als logische Kanäle bezeichnet. In dem hier dargestellten Fall wird nunmehr der Funkkanal TN2 als Sprach-Kanal eines- Voice Group Calls (VGC) verwendet. Die zu diesem Funkkanal TN2 benachbarten Kanäle TN1 und TN3 werden als VGC-Signalisierungs-Kanäle bzw. -Zeitschlitze verwendet. Durch Zuweisung der zusätzlichen Funkkanäle TN1 und TN3 zu einem Voice Group Call, wird die Bandbreite des Voice Group Calls erhöht. Das bedeutet, dass mit Hilfe der Kanäle TN1 und TN3 es für einen oder mehrere Teilnehmer des VGCs möglich wird, parallel zu ihrer jeweiligen aktiven Teilnahme an dem VGC andere sogenannte Point-to-Point-Dienste in Anspruch zu nehmen. Diese anderen Point-to-Point-Dienste werden sodann über die Kanäle TN1 oder TN3 initiiert und übertragen. Bei derartigen Point-to-Point-Diensten kann es sich beispielsweise um einen SMS (Short Message Service), ein Inband-Paging oder eine Inband-Notification handeln. Bei einem Paging wird selektiv ein Teilnehmer des VGCs adressiert, welcher gerufen wird und für welchen aus dem Netz ein Verbindungswunsch, d.h. ein eingehender Ruf, gewünscht ist. Ferner können über die zusätzlich bereitgestellte Bandbreite parallel zu dem aktiven VGC Informationen über das Netz zu den Teilnehmern des VGCs übertragen werden, was einer Inband-Notification entsprechen würde. Die eingehenden Verbindungswünsche, können dabei für sogenannte Packet Switched- oder Circuit Switched-Dienste übertragen werden. Dadurch, dass die genannten Dienste mittels der zusätzlich bereitgestellten Bandbreite parallel zu dem aktiven VGC übertragen werden können, wird dem VGC keine Bandbreite entzogen, wodurch auch die Sprachqualität des VGC-Dienstes nicht reduziert wird.

Es ist denkbar, dass ein weiterer VGC aktiviert ist, dessen Sprach-Zeitschlitz auf Zeitschlitz TN4 liegt, so dass dieser VGC neben dem VGC, dessen Sprach-Zeitschlitz auf TN2 liegt, den VGC-Signalisierungs-Zeitschlitz auf TN3 verwendet. Dadurch ergibt sich eine weitere Optimierung der Ausschöpfung zusätzlich bereitgestellter Bandbreite. -

Darüber hinaus ist es denkbar, dass für den VGC, dessen Sprach-Zeitschlitz auf TN2 liegt, die VGC-Signalisierungs-Zeitschlitze TN1 und TN3 dynamisch bei Bedarf hinzugeschaltet werden. Durch eine dynamische Zuweisung, werden seitens eines VGCs nicht zwei Kanäle, in dem hier gezeigten Fall TN1 und TN3, unnötig dauerhaft belegt.

## Patentansprüche

1. Verfahren zur Erhöhung einer für einen Gruppenruf verfügbaren Bandbreite in einem GSM-Netz, wobei dem Gruppenruf (VGC) innerhalb eines in mehrere Zeitschlitze (TN0, ..., TN7) unterteilten Funkkanals (1) des GSM-Netzes ein erster (TN2) und mindestens ein zweiter (TN1, TN3) Zeitschlitz zugeordnet werden, wobei der erste Zeitschlitz (TN2) zur Übertragung von Nutzdaten des Gruppenrufs (VGC) und der mindestens eine zweite Zeitschlitz (TN1, TN3) zur Bereitstellung zusätzlicher Bandbreite vorgesehen werden.

2. Verfahren nach Anspruch 1, bei dem der erste (TN2) und der mindestens eine zweite Zeitschlitz (TN1, TN3) des Funkkanals (1) als benachbarte Zeitschlitze innerhalb des Funkkanals (1) gewählt werden.

3. Verfahren nach Anspruch 1 oder 2, bei dem dem mindestens einen zweiten Zeitschlitz (TN1, TN3) ein logischer Kanal zugewiesen wird.

4. Verfahren nach Anspruch 3, bei dem dem mindestens einen zweiten Zeitschlitz (TN1, TN3) ein in 3GPP standardisierter logischer Kanal zugewiesen wird.

5. Verfahren nach einem der Ansprüche 1 bis 4, bei dem der mindestens eine zweite Zeitschlitz (TN1, TN3) je nach benötigter Bandbreite dynamisch zugewiesen wird.

6. Verfahren nach einem der vorhergehenden Ansprüche, bei der mindestens eine zweite Zeitschlitz (TN1, TN3) mehreren Gruppenrufen zugeordnet wird.

7. Verfahren nach einem der vorhergehenden Ansprüche, bei dem die zusätzliche Bandbreite des mindestens einen zweiten Zeitschlitzes (TN1, TN3) für Point-to-Point-Dienste, insbesondere SMS-Dienste, verwendet wird.

8. Verfahren nach einem der vorhergehenden Ansprüche, bei dem die zusätzliche Bandbreite des mindestens einen zweiten Zeitschlitzes (TN1, TN3) zur Übertragung eingehender Verbindungswünsche für Sprach- und Datenverbindungen zu einem an dem Gruppenruf partizipierenden Teilnehmer verwendet wird.

9. Verfahren nach einem der vorhergehenden Ansprüche, bei dem die zusätzliche Bandbreite des mindestens einen zweiten Zweitschlitzes (TN1, TN3) für Paging und/oder Notification verwendet wird.

10. Computerprogramm mit einem Programmcode, mit dessen Hilfe alle Schritte eines Verfahrens nach einem der Ansprüche 1 bis 9 durchgeführt werden können, wenn das Computerprogramm auf einem Computer oder einer entsprechenden Recheneinheit ausgeführt wird.

11. Computerprogrammprodukt mit einem Programmcode, der auf einem computerlesbaren Datenträger gespeichert ist, mit dessen Hilfe alle Schritte eines Verfahrens nach einem der Ansprüche 1 bis 9 durchgeführt werden können, wenn das Computerprogramm auf einem Computer oder einer entsprechenden Recheneinheit ausgeführt wird.

## Claims

1. Method for increasing a bandwidth available for a group call in a GSM network, wherein a first (TN2) and at least one second (TN1, TN3) time slot are allocated to the group call (VGC) within a radio channel (1) of the GSM network the readio channel (1) being divided into a plurality of time slots (TN0, ..., TN7), the first time slot (TN2) being provided for the transmission of reference data of the group call (VGC) and the at least one second time slot (TN1, TN3) being provided in order to supply additional bandwidth.

2. Method according to claim 1, wherein the first (TN2) and the at least one second time slot (TN1, TN3) of the radio channel (1) are selected as adjacent time slots within the radio channel (1).

3. Method according to claim 1 or 2, wherein a logic channel is assigned to the at least one second time slot (TN1, TN3).

4. Method according to claim 3, wherein a logic channel standardised in 3GPP is assigned to the at least one second time slot (TN1, TN3).

5. Method according to anyone of claims 1 to 4, wherein the at least one second time slot (TN1, TN3) is assigned dynamically depending on the bandwidth required.

6. Method according to anyone of the preceding claims, wherein the at least one second time slot (TN1, TN3) is allocated to a plurality of group calls.

7. Method according to anyone of the preceding claims, wherein the additional bandwidth of the at least one second time slot (TN1, TN3) is used for point-to-point services, particularly SMS services.

8. Method according to anyone of the preceding claims, wherein the additional bandwidth of the at least one second time slot (TN1, TN3) is used for transmitting incoming connection requests for speech and data connections to a subscriber participating in the group call.

9. Method according to anyone of the preceding claims, wherein the additional bandwidth of the at least one second time slot (TN1, TN3) is used for paging and/or notification.

10. Computer program having a program code by means of which all the steps of a process according to anyone of claims 1 to 9 can be carried out when the computer program is run on a computer or a corresponding computer unit.

11. Computer program product having a program code which is stored on a computer-readable data carrier by means of which all the steps of a process according to anyone of claims 1 to 9 can be carried out when the computer program is run on a computer or a corresponding computer unit.

## Revendications

1. Procédé pour augmenter la largeur de la bande passante disponible pour un appel groupé dans un réseau GSM, dans lequel une première fenêtre temporelle (TN 2) et au moins une seconde fenêtre temporelle (TN1, TN3) sont associées à l'appel groupé (VGC) à l'intérieur d'un canal radio (1) du réseau GSM, le canal radio (1) étant subdivisé en plusieurs fenêtres temporelles (TN0, ..., TN7), la première fenêtre temporelle (TN2) étant prévue pour la transmission de données utilitaires de l'appel groupé (VGC) et ladite au moins une seconde fenêtre temporelle (TN1, TN3) étant prévue pour mettre à disposition une largeur de bande additionnelle.

2. Procédé selon la revendication 1, dans lequel la première fenêtre temporelle (TN2) et ladite au moins une seconde fenêtre temporelle (TN1, TN3) du canal radio (1) sont choisies comme fenêtres temporelles voisines à l'intérieur du canal radio (1).

3. Procédé selon la revendication 1 ou 2, dans lequel un canal logique est attribué à ladite au moins une seconde fenêtre temporelle (TN1, TN3).

4. Procédé selon la revendication 3, dans lequel un canal logique standardisé en 3GPP est attribué à ladite au moins une seconde fenêtre temporelle (TN1, TN3).

5. Procédé selon l'une quelconque des revendications 1 à 4, dans lequel ladite au moins une seconde fenêtre temporelle (TN1, TN3) est attribuée de manière dynamique selon la largeur de bande nécessaire.

6. Procédé selon l'une quelconque des revendications précédentes, dans lequel ladite au moins une seconde fenêtre temporelle (TN1, TN3) est associée à plusieurs appels groupés.

7. Procédé selon l'une quelconque des revendications précédentes, dans lequel la largeur de bande additionnelle de ladite au moins une seconde fenêtre temporelle (TN1, TN3) est utilisée pour les services de point-à-point, en particulier des services SMS.

8. Procédé selon l'une quelconque des revendications précédentes, dans lequel la largeur de bande additionnelle de ladite au moins une seconde fenêtre temporelle (TN1, TN3) est utilisée pour la transmission de demandes de liaison entrantes pour des liaisons vocales et des liaisons de données vers un utilisateur participant à l'appel groupé.

9. Procédé selon l'une quelconque des revendications précédentes, dans lequel la largeur de bande additionnelle de ladite au moins une seconde fenêtre temporelle (TN1, TN3) est utilisée pour des services de recherche de personnes et/ou de notification.

10. Programme d'ordinateur comprenant un code de programme à l'aide duquel toutes les étapes d'un procédé selon l'une quelconque des revendications 1 à 9 peuvent être exécutées quand le programme d'ordinateur est exécuté sur un ordinateur ou sur une unité de calcul correspondante.

11. Produit formant programme d'ordinateur comprenant un code de programme mémorisé sur un support de données lisible à l'ordinateur à l'aide duquel toutes les étapes d'un procédé selon l'une quelconque des revendications 1 à 9 peuvent être exécutées quand le programme d'ordinateur est exécuté sur un ordinateur ou sur une unité de calcul correspondante.
